Europäisches Patentamt

European Patent Office

Office européen des brevets

(19)

(11) Numéro de publication : **0 039 649**
**B1**

(12) **FASCICULE DE BREVET EUROPÉEN**

(45) Date de publication du fascicule du brevet :
12.02.86

(51) Int. Cl.⁴ : **H 02 K 25/00**

(21) Numéro de dépôt : 81400721.7

(22) Date de dépôt : 07.05.81

(54) **Moteur électrique à courant continu.**

(30) Priorité : 07.05.80 CA 351410

(43) Date de publication de la demande :
11.11.81 Bulletin 81/45

(45) Mention de la délivrance du brevet :
12.02.86 Bulletin 86/07

(84) Etats contractants désignés :
**AT BE CH DE FR GB IT LI LU NL SE**

(56) Documents cités :
DE-A- 2 153 144
DE-A- 2 613 505
DE-C-   681 826
FR-A-   708 988
FR-A- 1 406 079
FR-A- 1 549 943
FR-A- 1 592 065
GB-A-    17 863
US-A- 3 662 196
US-A- 3 678 359

(73) Titulaire : **Leveille, Gilles**
**215 rue Mercier**
**Drummondville Québec, J2B 5G2 (CA)**

(72) Inventeur : **Leveille, Gilles**
**215 rue Mercier**
**Drummondville Québec, J2B 5G2 (CA)**

(74) Mandataire : **Verdier, Louis**
**Cabinet BERT, de KERAVENANT ET HERRBURGER**
**115 Boulevard Haussmann**
**F-75008 Paris (FR)**

## Description

La présente invention concerne un moteur électrique fonctionnant sur courant continu et sans brosses de contact.

Il existe actuellement sur le marché plusieurs types de moteur électrique comprenant un rotor et un stator qui chacun comprennent plusieurs pièces monopolaires. Pour faire tourner le moteur, on active sélectivement une paire de pièces monopolaires diamétralement opposées de façon à créer un champ magnétique tournant.

Comme les pièces employées sont monopolaires, le circuit magnétique formé doit nécessairement passer par deux de ces pièces et faire un certain détour, en traversant par exemple une bonne partie du stator. Des exemples de tels moteurs sont clairement illustrés par les brevets US-A-3 984 711 et US-A-4 048 531. Afin de diminuer les pertes résultant de ces détours, la présente invention propose de réduire la longueur du circuit magnétique en employant des pièces dipolaires sur le rotor et le stator de façon à ce que le circuit magnétique soit limité presqu'uniquement à ces pièces dipolaires sans s'étendre à travers tout le moteur.

On connaît également du brevet FR-A-1 592 065, un moteur dont le rotor et le stator sont munis de pièces dipolaires également réparties autour de leur périphérie respective, le nombre de pièces dipolaires du rotor étant moins élevé que le nombre de pièces dipolaires du stator. Ces pièces dipolaires du stator comprennent des bobinages disposés autour d'un noyau magnétique en forme de U. Les dimensions et la forme des pièces dipolaires d'un tel moteur font en sorte qu'un nombre important de pièces dipolaires est nécessaire pour son fonctionnement. De plus, la structure de telles pièces ne permet pas une utilisation optimale du flux magnétique généré par les bobinages.

L'invention concerne un moteur électrique comprenant un rotor tournant autour d'un axe, un stator positionné autour dudit axe, le rotor et le stator comportant chacun un ensemble de pièces dipolaires également réparties autour de leur périphérie respective, lesdits ensembles étant l'un à l'intérieur d'un cercle centré sur ledit axe et situé dans un plan perpendiculaire à cet axe, et l'autre à l'extérieur dudit cercle, lesdits ensembles ayant un nombre différent de pièces dipolaires, le moteur comprenant en outre des moyens associés à un premier desdits ensembles pour alimenter électriquement les pièces dipolaires dudit premier ensemble de façon à aimanter sélectivement celles-ci et former un champ magnétique tournant, lesdites pièces dipolaires étant espacées de façon à ce que l'électro-aimantation de l'une des pièces dipolaires dudit premier ensemble crée avec une des pièces dipolaires du second desdits ensembles au moins un circuit magnétique, ledit circuit magnétique cherchant à se refermer et fournissant ainsi une force de levier qui entraîne le rotor en rotation, ledit moteur étant caractérisé en ce que :

a) lesdites pièces dipolaires de chaque ensemble ont un espacement entre elles et une dimension le long de la circonférence dudit cercle choisis de manière à réduire substantiellement le nombre de pièces dipolaires requis pour produire de façon constante la force de levier nécessaire pour entraîner le rotor en rotation ;

b) chacune des pièces dipolaires dudit premier ensemble comprend un noyau magnétique ayant une section perpendiculaire à la circonférence dudit cercle substantiellement en forme de E, l'axe de chaque pièce dipolaire passant par les pôles est perpendiculaire à un rayon du rotor et parallèle à l'axe de ce dernier, et l'axe longitudinal de chaque pièce dipolaire est perpendiculaire à un rayon et à l'axe du rotor, ledit noyau magnétique définissant ainsi une protubérance centrale ainsi qu'une première et une seconde protubérances extérieures toutes trois disposées du côté dudit cercle ;

c) chacune des pièces dipolaires dudit premier ensemble comprend également au moins un bobinage disposé autour de la protubérance centrale de son noyau magnétique, ledit bobinage étant associé aux moyens d'alimentation électrique pour créer ledit champ magnétique tournant ;

d) chaque pièce dipolaire dudit second ensemble comprend un noyau magnétique qui, durant la rotation du rotor, définit, avec le noyau magnétique de toute pièce dipolaire dudit premier ensemble lui faisant face au moins en partie, deux circuits magnétiques entourant de près le bobinage de la pièce dipolaire dudit premier ensemble et à travers lesquels circulent respectivement deux boucles de flux magnétique généré par le bobinage de la pièce dipolaire du premier ensemble suite à l'alimentation de celui-ci par les moyens d'alimentation électrique, l'un des deux circuits magnétiques passant à travers le noyau magnétique de la pièce dipolaire dudit second ensemble ainsi qu'à travers la protubérance centrale et une première desdites protubérances extérieures de la pièce dipolaire du premier ensemble, et l'autre desdits circuits magnétiques passant à travers le noyau magnétique de la pièce dipolaire dudit second ensemble ainsi qu'à travers la protubérance centrale et la seconde desdites protubérances extérieures de la pièce dipolaire du premier ensemble, lesdits deux circuits magnétiques constituant ledit au moins un circuit magnétique et cherchant à se refermer pour ainsi fournir la force de levier qui entraîne le rotor en rotation ;

la structure desdites pièces dipolaires du moteur définissant lesdits deux circuits magnétiques qui ont une longueur réduite au minimum afin d'utiliser de manière très efficace le flux magnétique produit par l'enroulement de chaque pièce dipolaire dudit premier ensemble pour produire la force de levier qui entraîne le rotor en rotation.

Le fonctionnement du moteur et ses caractéristiques seront mieux compris à l'aide des dessins illustrant un exemple de réalisation de l'invention.

La figure 1 représente une vue en coupe du dessus d'un moteur selon la présente invention.

La figure 2 est une vue en coupe transversale d'un dipôle du rotor et un dipôle du stator formant un circuit magnétique.

La figure 3 représente une vue en coupe radiale du moteur illustré sur la figure 1.

La figure 4 représente une vue de face d'un système de contrôle de l'alimentation électrique des bobinages.

La figure 5 représente une vue en coupe radiale montrant les détails du moteur près de son axe.

La figure 6 représente un schéma d'un circuit électrique qui peut être employé pour contrôler le fonctionnement du moteur.

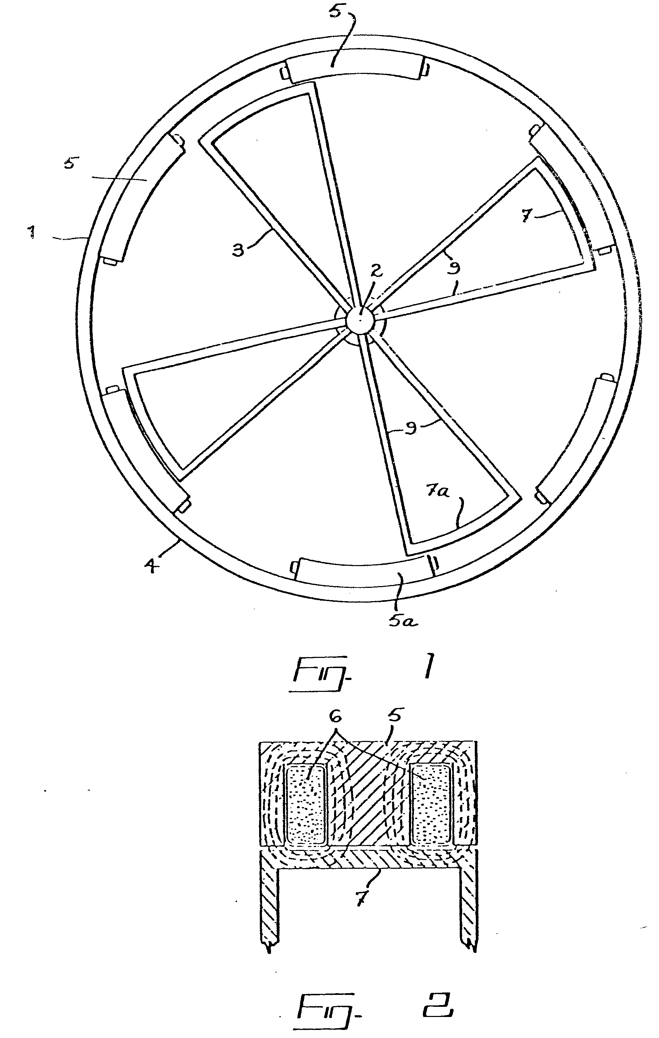

Le moteur illustré sur la figure 1 comprend un stator 1 et un rotor 3 ayant un axe 2. Le stator comprend six pièces dipolaires 5 portant chacune au moins un bobinage et supportées par une armature circulaire 4 entourant le rotor. Les pièces 5 sont disposées extérieurement par rapport à un cercle imaginaire centré sur l'axe 2. Le rotor 3 comprend quatre pièces dipolaires 7, des bras 9 supportant les pièces dipolaires 7 et un noyau centré sur l'axe 2 et sur lequel sont fixés les bras 9. Les pièces 7 sont disposées intérieurement par rapport au même cercle imaginaire que précédemment.

Cette structure du stator et du rotor permet avantageusement d'obtenir un moteur relativement léger.

Les pièces dipolaires 5 et 7 sont faites de fer doux laminé, alors que l'armature 4 et les bras 9 peuvent être fabriqués avec tout matériau suffisamment solide pour l'usage désiré du moteur. Il n'est pas nécessaire que ce matériau soit un bon conducteur magnétique puisque les circuits magnétiques formés ne traversent ni les bras du rotor, ni l'armature du stator, mais se limitent essentiellement aux pièces dipolaires.

Le diamètre du moteur ainsi que le nombre de pièces dipolaires montées sur le rotor ou le stator peuvent varier à volonté, selon les besoins ou exigences techniques. De préférence, on s'arrangera pour que la distance séparant chaque pièce dipolaire du stator soit sensiblement égale à la largeur des pièces dipolaires du stator et du rotor, mais on pourra faire varier cette distance si l'on utilise un nombre de pièces dipolaires différent sur le stator ou le rotor, par exemple. Dans tous les cas, le stator et le rotor auront un nombre différent de pièces.

En plus des pièces mécaniques, des moyens d'alimentation sont aussi prévus pour aimanter au temps voulu les pièces dipolaires 5 du stator. Ces moyens seront décrits en détail un peu plus loin.

Le fonctionnement du présent moteur électrique à courant continu est le suivant : lorsqu'une pièce 7a du rotor approche d'une pièce 5a électro-aimantée par les moyens d'alimentation, il se crée un circuit mécanique cherchant à se refermer. Il en résulte un effet de levier poussant le centre de la pièce 7a à se rapprocher du centre de la pièce 5a pour réduire la longueur du circuit magnétique.

Un mouvement rotatif en résulte. Puis, la pièce 5a n'est plus alimentée. Une fraction de tour plus loin, une autre pièce 5 est électro-aimantée pour continuer le cycle.

En modifiant la distance entre la pièce 5a lorsqu'elle est alimentée et la pièce 7a, on peut faire varier la force résultant de l'effet de levier décrit plus haut. Il devient même possible d'inverser la direction du mouvement rotatif, c'est-à-dire de faire reculer le moteur. Les moyens d'alimentation décrits plus loin, permettent de modifier cette distance.

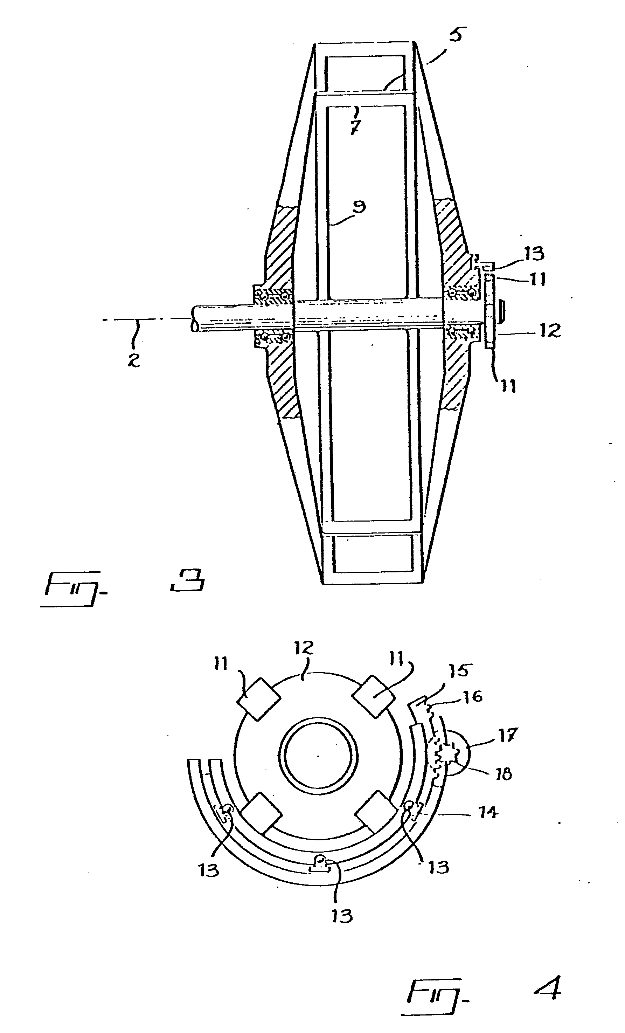

La figure 2 illustre plus en détail l'aspect du circuit magnétique (indiqué en pointillés) qui se forme entre une pièce 7 du rotor et une pièce 5 du stator lorsqu'un courant circule dans le bobinage de la pièce 5. Comme on peut le voir, la pièce 5 a la forme de E couché et porte au moins un bobinage 6 qui est alimenté à intervalle précis durant le cycle de rotation par les moyens d'alimentation. On pourra toutefois employer plusieurs bobinages et faire varier la forme exacte des pièces dipolaires du stator. Il importe que les pôles induits par les bobinages 6 sur la surface des pièces dipolaires 5 du stator faisant face aux pièces dipolaires 7 soient orientés de façon à ce que l'axe de chaque pièce dipolaire 5 passant par les pôles soit perpendiculaire à un rayon du rotor et parallèle à l'axe de ce dernier et que l'axe longitudinal de chaque pièce dipolaire 5 soit perpendiculaire à un rayon et à l'axe du rotor. Il importe également que le circuit magnétique soit concentré dans la région de chacune des pièces 5. Evidemment, une courbure est prévue pour chaque pièce, vu la forme circulaire du moteur.

Il doit aussi être noté que les pôles des pièces 7 du rotor n'existent que dans le voisinage d'une pièce aimantée 5 du stator. En fait, le terme « dipolaire » est employé ici surtout pour distinguer les pièces utilisées dans la présente invention par rapport aux pièces monopolaires généralement utilisées.

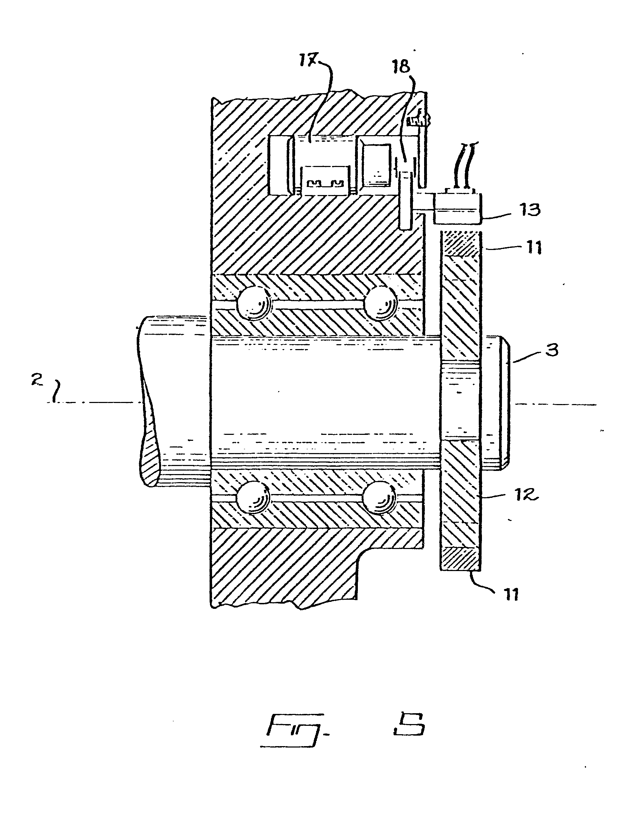

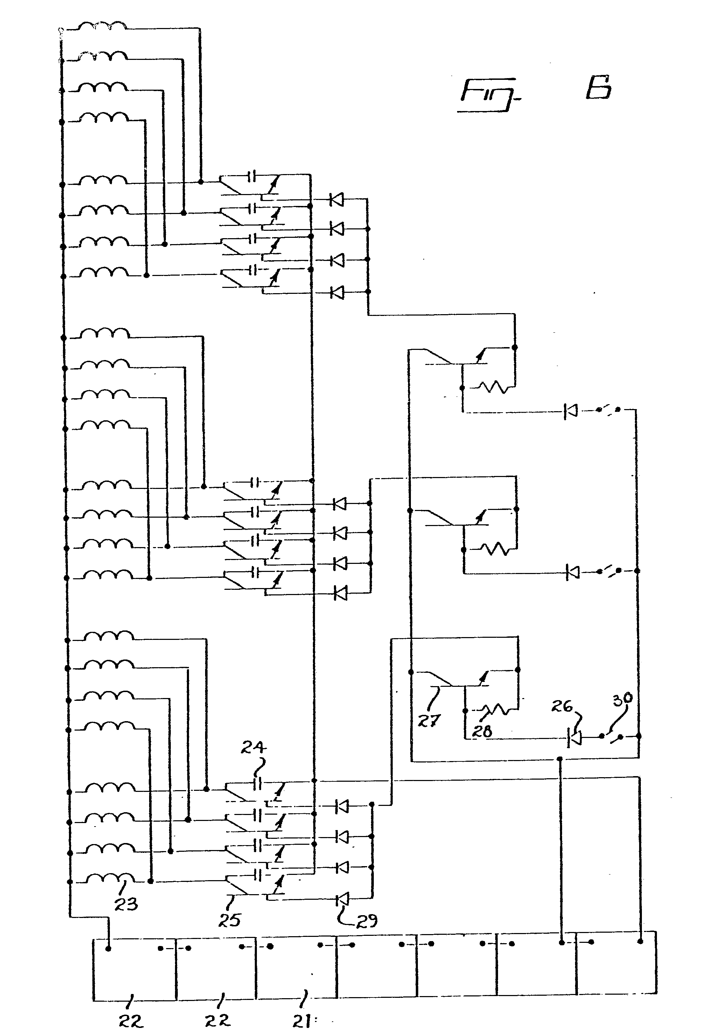

La figure 3 montre une coupe du moteur permettant de voir les moyens d'alimentation des bobinages des pièces dipolaires du stator. Les figures 4 et 5 illustrent d'ailleurs ces moyens plus en détail. Ceux-ci permettent de faire varier l'angle entre une pièce du rotor et une pièce du stator lors de l'alimentation des bobinages des pièces du stator. On peut avoir un groupe d'aimants 11 posés sur une pièce rotative en forme de disque 12 fixée au rotor 3 de façon à tourner avec lui pour former sélectivement les contacts magnétiques 13 situés sur le stator. Chacun des contacts 13 est associé à au moins un des bobinages et en provoquera l'électro-aimantation.

Ces contacts 13 peuvent être de type « reed » et sont placés sur un support de plastique 14 soutenu par la pièce rotative 15 dont on peut faire varier la position angulaire relative au moyen d'un système de pièces mécaniques ou d'un petit moteur 17 contrôlé à distance. La pièce rotative 15 comprend extérieurement une série de dents d'engrenage 16 s'insérant entre les dents 18 du moteur 17.

Le moteur 17 peut être un moteur à courant continu contrôlé par un asservissement de façon à avoir une position angulaire dépendant d'un potentiomètre contrôleur. En faisant varier la position du potentiomètre, on fait aussi varier la position relative des contacts 13 et des pièces 5 du stator, l'angle entre une pièce du rotor et une pièce du stator lors de l'aimantation de celle-ci et, donc, la force de levier du moteur. Différents types de moteurs ou d'asservissements peuvent être utilisés, comme un asservissement échantillonnant la vitesse du moteur ou l'angle de la pièce rotative 15 ou du rotor du moteur 17. Par ailleurs, l'asservissement est facultatif et un autre dispositif donnant des résultats semblables pourrait tout aussi bien être utilisé.

Vu les dispositions symétriques des contacts et des aimants, on peut diviser par deux le nombre de contacts en associant ensemble chaque paire de pièces dipolaires opposées du stator et en les contrôlant à l'aide du même contact magnétique 13. En effet, les contacts magnétiques diamétralement opposés seraient fermés simultanément, s'ils étaient doublés. De cette façon, on diminue le nombre de pièces nécessaires à la fabrication du moteur.

Le moteur 17 peut avoir son axe principal situé parallèlement, ou perpendiculairement par rapport à l'axe du rotor 3, ou même dans une position intermédiaire. On peut également prévoir des engrenages 18 de découplage. En faisant tourner ce moteur d'un côté ou de l'autre, on fait varier la position des contacts lors de leur fermeture par rapport à la position des pièces du rotor. De cette façon, on peut faire varier la force du bras de levier formé par chaque paire de pièces dipolaires alimentées du stator et de pièces du rotor. Il devient même possible d'inverser la direction de la rotation du rotor, comme il a été expliqué plus haut.

Pour alimenter les bobinages des pièces du stator, on peut placer ces bobinages en série avec les contacts magnétiques et l'alimentation. Ceci pose toutefois des problèmes de fiabilité si le courant nécessaire pour alimenter les bobinages est trop élevé. On peut également employer des contacts un peu plus gros.

Mais, un circuit comme celui illustré à la figure 6 est plus avantageux si un moteur plus puissant doit être construit. Ce circuit comprend une source d'alimentation 21 placée en série avec les bobinages 23 des stators et des transistors 25 utilisés comme interrupteurs électroniques. La source d'alimentation 21 comprend des accumulateurs 22 placés en série de façon à donner une tension suffisamment élevée. Le circuit fonctionne de cette façon :

Lorsqu'un contact 30 est ouvert, la résistance 28 polarise le transistor 27, employé comme commandeur, de façon à le bloquer. L'émetteur du transistor 27 étant connecté à la base de transistors commandés 25 par l'intermédiaire d'une diode 29, les transistors 25 sont aussi bloqués et aucun courant ne traverse les bobinages 23 correspondants.

En fermant le contact 30, un courant traverse la diode 26 et débloque le transistor 27 qui peut alors fournir un courant traversant la diode 29 pour débloquer les transistors 25 qui deviennent alors conducteurs et le bobinage 23 est traversé par un courant. Comme chaque transistor 27 commande quatre transistors 25 et huit bobinages 23, lorsque le contact commandeur est fermé, les huit bobinages sont alimentés simultanément. Un condensateur est prévu pour chaque transistor 25 afin d'allonger la durée de l'électro-aimantation des pièces dipolaires 5 du stator.

Dans le circuit illustré, trois contacts et trois paires de pièces dipolaires sont utilisés. Le fonctionnement de chaque circuit associé à chacun des trois contacts est similaire.

On notera à ce point-ci l'emploi de plusieurs bobinages en parallèle qui permet de répartir le courant circulant dans plusieurs transistors, ainsi que le champ magnétique produit.

On peut modifier le circuit utilisé. Par exemple, on pourrait employer un autre type d'interrupteur électronique que le transistor.

La réalisation illustrée est évidemment donnée à titre d'exemple non limitatif. On peut faire varier les différents paramètres comme les grandeurs relatives des différentes pièces, le nombre de pièces dipolaires, le circuit électronique, etc.

## Revendications

1. Moteur électrique comprenant un rotor (3) tournant autour d'un axe (2), un stator (1) positionné autour dudit axe, le rotor et le stator comportant chacun un ensemble de pièces dipolaires (5, 7) également réparties autour de leur périphérie respective, lesdits ensembles étant l'un à l'intérieur d'un cercle centré sur ledit axe (2) et situé dans un plan perpendiculaire à cet axe, et l'autre à l'extérieur dudit cercle, lesdits ensembles ayant un nombre différent de pièces dipolaires (5, 7), le moteur comprenant en outre des moyens associés à un premier desdits ensembles pour alimenter électriquement les pièces dipolaires (5) dudit premier ensemble de façon à aimanter sélectivement celles-ci et former un champ magnétique tournant, lesdites pièces dipolaires (5, 7) étant espacées de façon à ce que l'électro-aimantation de l'une des pièces dipolaires (5) dudit premier ensemble crée avec une des pièces dipolaires (7) du second desdits ensembles au moins un circuit magnétique, ledit circuit magnétique cherchant à se refermer et fournissant ainsi une force de levier qui entraîne le rotor en rotation, ledit moteur étant caractérisé en ce que :

a) lesdites pièces dipolaires de chaque ensemble ont un espacement entre elles et une dimension le long de la circonférence dudit cercle choisis de manière à réduire substantiellement le nombre de pièces dipolaires requis pour produire de façon constante la force de levier nécessaire pour entraîner le rotor (3) en rotation ;

b) chacune des pièces dipolaires (5) dudit premier ensemble comprend un noyau magnétique ayant une section perpendiculaire à la circonférence dudit cercle substantiellement en forme de E, l'axe de chaque pièce dipolaire (5) passant par les pôles est perpendiculaire à un rayon du rotor et parallèle à l'axe de ce dernier et l'axe longitudinal de chaque pièce dipolaire est perpendiculaire à un rayon et à l'axe du rotor, ledit noyau magnétique définissant ainsi une protéburance centrale ainsi qu'une première et une seconde protubérances extérieures, toutes trois disposées du côté dudit cercle ;

c) chacune des pièces dipolaires (5) dudit premier ensemble comprend également au moins un bobinage (6) disposé autour de la protubérance centrale de son noyau magnétique, ledit bobinage (6) étant associé aux moyens d'alimentation électrique pour créer ledit champ magnétique tournant ;

d) chaque pièce dipolaire (7) dudit second ensemble comprend un noyau magnétique qui, durant la rotation du rotor, définit, avec le noyau magnétique de toute pièce dipolaire (5a) dudit premier ensemble lui faisant face au moins en partie, deux circuits magnétiques entourant de près le bobinage (6) de la pièce dipolaire (5a) dudit premier ensemble et à travers lesquels circulent respectivement deux boucles de flux magnétique généré par le bobinage (6) de la pièce dipolaire du premier ensemble suite à l'alimentation de celui-ci par les moyens d'alimentation électrique, l'un des deux circuits magnétiques passant à travers le noyau magnétique de la pièce dipolaire (7a) dudit second ensemble ainsi qu'à travers la protubérance centrale et une première desdites protubérances extérieures de la pièce dipolaire (5a) du premier ensemble, et l'autre desdits circuits magnétiques passant à travers le noyau magnétique de la pièce dipolaire (7a) dudit second ensemble ainsi qu'à travers la protubérance centrale et la seconde desdites protubérances extérieures de la pièce dipolaire (5a) du premier ensemble, lesdits deux circuits magnétiques constituant ledit au moins un circuit magnétique et cherchant à se refermer pour ainsi fournir la force de levier qui entraîne le rotor (3) en rotation ;

la structure desdites pièces dipolaires (5, 7) du moteur définissant lesdits deux circuits magnétiques qui ont une longueur réduite au minimum afin d'utiliser de manière très efficace le flux magnétique produit par l'enroulement (6) de chaque pièce dipolaire (5) dudit premier ensemble pour produire la force de levier qui entraîne le rotor (3) en rotation.

2. Moteur selon la revendication 1, caractérisé en ce que les pièces dipolaires (5) du stator (1) sont situées à l'extérieur dudit cercle et constituent les pièces dipolaires dudit premier ensemble, et en ce que les pièces dipolaires (7) du rotor (3) sont situées à l'intérieur dudit cercle et constituent les pièces dipolaires dudit second ensemble.

3. Moteur selon la revendication 1, caractérisé en ce que l'espacement entre les pièces dipolaires (5) du stator (1) est sensiblement identique à la longueur de chaque pièce dipolaire (5, 7), et en ce que les pièces (7) du rotor (3) sont moins nombreuses que les pièces (5) du stator (1).

4. Moteur selon la revendication 1, caractérisé en ce que les pièces dipolaires (5) du stator constituent ledit premier ensemble et les pièces dipolaires (7) du rotor ledit second ensemble, et en ce que les moyens d'alimentation électrique comprennent une source de courant, un groupe d'aimants (11) disposés sur une pièce rotative (12) à des angles correspondant aux angles séparant chaque pièce dipolaire (7) du rotor (3), et des contacts magnétiques (13) situés autour d'un cercle concentrique à la pièce rotative (12) à des angles correspondant aux angles séparant chaque pièce dipolaire (5) du stator (1), lesdits contacts (13) étant fermés par le passage d'un desdits aimants (11) du groupe d'aimants lorsque la pièce rotative (12) est entraînée en rotation.

5. Moteur selon la revendication 4, caractérisé en ce que chaque ensemble a un nombre pair de pièces dipolaires (5, 7), la pièce rotative (12) est située sur le rotor (3), chaque aimant (11) du groupe d'aimants est associé à une seule pièce dipolaire (7) du rotor (3), et chaque contact (13) est associé à une paire de pièces dipolaires (5) du stator (1) diamétralement opposées par rapport à l'axe (2) du rotor, la fermeture d'un des contacts (13) entraînant l'électro-aimantation de la paire de pièces dipolaires (5) qui lui est associée.

6. Moteur selon la revendication 5, caractérisé en ce que les moyens d'alimentation comprennent en outre une autre pièce rotative (15) sur laquelle sont montés les contacts (13) et des moyens pour déplacer cette autre pièce rotative (15) en rotation autour de l'axe (2) du rotor.

7. Moteur selon la revendication 6, caractérisé en ce que les moyens d'alimentation comprennent en outre des moyens mécaniques pour déplacer l'autre pièce rotative (15) portant les contacts (13), à distance.

8. Moteur selon la revendication 7, caractérisé en ce que les moyens mécaniques pour déplacer l'autre pièce (15) à distance incluent un petit moteur électrique (17).

9. Moteur selon la revendication 4, caractérisé en ce que le bobinage (6) de chaque pièce dipolaire (5) du stator (1) est placé en série avec la source de courant et un des contacts (13) des moyens d'alimentation.

10. Moteur selon la revendication 4, caractérisé en ce que le bobinage (6) de chaque pièce dipolaire (5) du stator est placé en série avec la source de courant et un interrupteur électronique, ledit interrupteur étant commandé par un des contacts (13) des moyens d'alimentation.

11. Moteur selon la revendication 10, caractérisé en ce que l'interrupteur électronique comprend un transistor commandeur (27) et au moins un transistor commandé (25) par ledit transistor commandeur (27).

12. Moteur selon la revendication 4, 10 ou 11, caractérisé en ce que chaque pièce dipolaire (5) du stator (1) comprend plusieurs bobinages (23) connectés en parallèle, lesdits plusieurs bobinages (23) étant commandés par un même contact parmi lesdits contacts (13).

### Claims

1. Electric motor comprising a rotor (3) rotating around an axis (2), a stator (1) positioned around said axis, the rotor and the stator each comprising a set of dipolar pieces (5, 7) equally distributed around their respective periphery, one of said sets being inside a circle centered on said axis (2) and located in a plane perpendicular to this axis, and the other of said sets being outside of said circle, said sets having a different number of diplar pieces (5, 7), the motor further comprising means associated to a first of said sets for supplying electric power to the dipolar pieces (5) of said first set so as to selectively magnetize these dipolar pieces and to form a rotating magnetic field, said dipolar pieces (5, 7) being spaced apart whereby the magnetization of one of the dipolar pieces (5) of said first set creates with one of the dipolar pieces (7) of the second of said sets at least one magnetic circuit, said magnetic circuit acting to try to close itself and thus producing a lever force which causes rotation of the rotor, said motor being characterized in that :

a) said dipolar pieces of each set have a spacing therebetween and a dimension along the circumference of said circle selected so as to substantially reduce the number of dipolar pieces required for producing in a constant manner the lever force necessary for causing rotation of the rotor (3) ;

b) each of the dipolar pieces (5) of said first set comprises a magnetic core having a section perpendicular to the circumference of said circle which is substantially E-shaped, the axis of each dipolar piece (5) passing through the poles is perpendicular to a radius of the rotor and parallel to the axis of the latter and the longitudinal axis of each dipolar piece is perpendicular both to a radius and to the axis of the rotor, said magnetic core thus defining a central protuberance as well as a first and a second outer protuberances, these three protuberances facing said circle ;

c) each of the dipolar pieces (5) of said first set also comprises at least one winding (6) disposed around the central protuberance of its magnetic core, said winding (6) being associated to said electric power supplying means so as to create said rotating magnetic field ;

d) each dipolar piece (7) of said second set comprises a magnetic core which, during rotation of the rotor, defines, with the magnetic core of any dipolar piece (5a) of said first set confronting it at least in part, two magnetic circuits nearly surrounding the winding (6) of the dipolar piece (5a) of said first set and through which flow respectively two loops of magnetic flux generated by the winding (6) of the dipolar piece of the first set upon energization of this winding by the electric power supplying means, one of said two magnetic circuits being defined through the magnetic core of the dipolar piece (7a) of said second set as well as through the central protuberance and a first of said outer protuberances of the dipolar piece (5a) of the first set, and the other of said magnetic circuits being defined through the magnetic core of the dipolar piece (7a) of said second set as well as through the central protuberance and the second of said outer protuberances of the dipolar piece (5a) of the first set, said two magnetic circuits constituting said at least one magnetic circuit and acting to try to close themselves for thereby producing the lever force which causes rotation of the rotor (3) ;

The structure of said dipolar pieces (5, 7) of the motor defining said two magnetic circuits which have a length reduced at the minimum in order to use very efficiently the magnetic flux produced by the winding (6) of each dipolar piece (5) of said first set for producing the lever force which causes rotation of the rotor (3).

2. Motor according to claim 1, characterized in that the dipolar pieces (5) of the stator (1) are located outside of said circle and constitute the dipolar pieces of said first set, and in that the dipolar pieces (7) of the rotor (3) are located inside said circle and constitute the dipolar pieces of said second set.

3. Motor according to claim 1, characterized in that the spacing between the dipolar pieces (5) of the stator (1) is substantially identical to the length of each dipolar piece (5, 7), and in that the number of dipolar pieces (7) of the rotor (3) is smaller than the number of dipolar pieces (5) of the stator (1).

4. Motor according to claim 1, characterized in that the dipolar pieces (5) of the stator constitute said first set and the dipolar pieces (7) of the rotor constitute said second set, and in that the electric power supplying means comprise a current source, a group of magnets (11) disposed on a rotative piece (12) and separated by angles corresponding to the angles separating each dipolar piece (7) of the rotor (3), and magnetic contacts (13) located on a circle concentric to the rotative piece (12) and separated by angles corresponding to the angles separating each dipolar piece (5) of the stator (1), said contacts (13) being closed upon passage of one of said magnets (11) of the group of magnets during rotation of the rotative piece (12).

5. Motor according to claim 4, characterized in that each set has a number of dipolar pieces (5, 7) which is a multiple of two, the rotative piece (12) is positioned on the rotor (3), each magnet (11) of the group of magnets is associated with a single dipolar piece (7) of the rotor (3), and each contact (13) is associated with a pair of dipolar pieces (5) of the stator (1) diametrically opposed with respect to the axis (2) of the rotor, the closing of one of said contacts (13) procuding magnetization of the pair of dipolar pieces (5) which is associated with this contact.

6. Motor according to claim 5, characterized in that said supplying means further comprise another rotative piece (15) carrying the contacts (13), and means for rotating this other rotative piece (15) around the axis (2) of the rotor.

7. Motor according to claim 6, characterized in that the supplying means further comprise mechanical means for remotely displacing the other rotative piece (15) carrying the contacts (13).

8. Motor according to claim 7, characterized in that the mechanical means for remotely displacing the other piece (15) include a small electrical motor (17).

9. Motor according to claim 4, characterized in that the winding (6) of each dipolar piece (5) of the stator (1) is serially connected with the current source and one of the contacts (13) of the supplying means.

10. Motor according to claim 4, characterized in that the winding (6) of each dipolar piece (5) of the stator is serially connected with the current source and an electronic switch, said switch being controlled by one of the contacts (13) of the supplying means.

11. Motor according to claim 10, characterized in that the electronic switch comprises a master transistor (27) and at least one transistor (25) controlled by said master transistor (27).

12. Motor according to claim 4, 10, or 11, characterized in that each dipolar piece (5) of the stator (1) comprises a plurality of windings (23) connected in parallel, said plurality of windings (23) being controlled by a same contact amongst said contacts (13).

## Patentansprüche

1. Elektromotor bestehend aus einem Rotor (3), der sich um eine Achse (2) dreht, und einem Stator (1), der um die besagte Achse angebracht ist, wobei der Rotor und der Stator je einen Satz von Dipolstücken (5, 7) enthalten, die auf dem entsprechenden Umfang verteilt sind ; von diesen Sätzen befindet sich einer im Innern eines auf der besagten Achse (2) zentrierten Ringes, der sich in einer Ebene senkrecht zu dieser Achse befindet, und der andere außerhalb des besagten Ringes, wobei die Sätze eine unterschiedliche Anzahl von Dipolstücken (5, 7) haben ; der Motor enthält außerdem Vorrichtungen, die mit dem ersten dieser Sätze verbunden sind, um die Dipolstücke (5) des ersten Satzes mit Strom zu versorgen, und zwar derart, daß diese (Sätze) abwechselnd magnetisiert werden und ein sich drehendes Magnetfeld gebildet wird. Die besagten Dipolstücke (5, 7) liegen so weit auseinander, daß die Magnetisierung eines dieser Dipolstücke (5) des ersten Satzes mit einem der Dipolstücke (7) des zweiten dieser Sätze mindestens einen Magnetkreis bildet, wobei dieser Magnetkreis versucht, sich zusammenzuziehen, und somit ein Drehmoment liefert, das den Rotor zum Rotieren bringt. Der Motor ist dadurch gekennzeichnet, daß :

a) die besagten Dipolstücke von jedem Satz untereinander eine Entfernung und eine Ausdehnung auf dem Kreisumfang des besagten Ringes haben, die so gewählt sind, daß die Anzahl von erforderlichen Dipolstücken beträchtlich reduziert wird, um kontinuierlich das nötige Drehmoment zuliefern, das erforderlich ist, um den Rotor (3) zum Rotieren zu bringen ;

b) jedes dieser Dipolstücke (5) des ersten Satzes einen Magnetkern enthält, der eine senkrechte Fläche zum Umkreis des besagten vorwiegend in E-Form gehaltenen Ringes hat, wobei die Achse jedes Dipolstückes (5), das an den Polen vorbeiläuft, senkrecht zu einem Rotorsegment und parallel zur Achse des letzteren verläuft und die Längsachse jedes Dipolstückes senkrecht zu einem Segment und zur Achse des Rotors steht ; der besagte Magnetkern bildet somit einen zentralen Pol (Protuberanz), wobei sich alle drei auf der Seite des besagten Ringes befinden ;

c) jedes der Dipolstücke (5) des besagten ersten Satzes auch mindestens eine Spule (6) enthält, die um den zentralen Pol (Protuberanz seines Magnetkernes angeordnet ist, wobei die Spule mit den Einrichtungen zur Stromeinspeisung verbunden ist, um das besagte sich drehende Magnetfeld zu schaffen ;

d) jedes Dipolstück (7) des zweiten Satzes einen Magnetkern enthält, der während des Rotierens des Rotors mit dem Magnetkern jedes Dipolstückes (5a) des ersten Satzes, der ihm zumindest teilweise gegenüberliegt, zwei Magnetkreise bildet, welche die Spule (6) des Dipolstückes (5a) vom ersten Satz eng umschließen und durch welche jeweils zwei Schleifen des Magnetflusses strömen, der durch die Spule (6) des Dipolstückes vom ersten Satz erzeugt wird, da er durch die elektrischen Versorgungseinrichtungen gespeist wird, wobei der eine der beiden Magnetkreise durch den Magnetkern des Dipolstückes (7a) des besagten zweiten Satzes läuft sowie auch durch den zentralen Pol (Protuberanz) und einen ersten der besagten äußeren Pole des Dipolstückes (5a) des ersten Satzes, und der andere dieser Magnetkreise durch den Magnetkern des Dipolstückes (7a) des besagten zweiten Satzes sowie durch den zentralen Pol und den zweiten der äußeren Pole des Dipolstückes (5a) des ersten Satzes läuft ; diese beiden Magnetkreise bilden zumindest den einen besagten Magnetkreis und versuchen, sich wieder zu schließen, um auf diese Weise das Drehmoment zu liefern, das den Rotor (3) zum Rotieren bringt ;

Die Struktur der besagten Dipolstücke (5, 7) des Motors bestimmt die besagten beiden Magnetkreise, welche eine auf ein Minimum beschränkte Länge haben, um auf sehr wirkungsvolle Weise den Magnetstrom zu nutzen, der durch die Spule (6) jedes Dipolstückes (5) des ersten Satzes erzeugt wird, um das Drehmoment zu schaffen, das den Rotor (3) zum Rotieren bringt.

2. Motor gemäß Patentanspruch 1, dadurch gekennzeichnet, daß die Dipolstücke (5) des Stators (1) sich außerhalb des besagten Ringes befinden und die Dipolstücke des besagten ersten Satzes bilden, und daß die Dipolstücke (7) des Rotors (3) im Innern des besagten Ringes liegen und die Dipolstücke des besagten zweiten Satzes bilden.

3. Motor gemäß Patentanspruch 1, dadurch gekennzeichnet, daß die Entfernung zwischen den Dipolstücken (5) des Stators (1) äußerst genau der Länge jedes Dipolstückes (5, 7) entspricht und daß die Elemente (7) des Rotors (3) weniger zahlreich sind als die Elemente (5) des Stators (1).

4. Motor gemäß Patentanspruch 1, dadurch gekennzeichnet, daß die Dipolstücke (5) des Stators den besagten ersten Satz bilden und die Dipolstücke (7) des Rotors den besagten zweiten Satz, und daß die Einrichtungen zur elektrischen Stromversorgung eine Stromquelle einschließen sowie eine Gruppe von Magneten (11), die auf einem Rotationsteil (12) angebracht sind an Winkeln, die den Winkeln entsprechen, welche jedes Dipolstück (5) vom Stator (1) trennen, wobei die besagten Kontakte (13) geschlossen werden durch den Durchlauf eines der besagten Magneten (11) der Magnetgruppe, wenn das Rotationsteil (12) zum Rotieren gebracht wird.

5. Motor gemäß Patentanspruch 4, dadurch gekennzeichnet, daß jeder Satz eine gerade Zahl von Dipolstücken (5, 7) besitzt, das Rotationsteil (12) sich auf dem Rotor (3) befindet, jeder Magnet (11) der Magnetgruppe mit einem einzigen Dipolstück (7) der Rotors (3) verbunden ist und jeder Kontakt (13) wiederum mit einem Paar der Dipolstücke (5) des Stators (1), welche entgegengesetzt zur Achse (2) des Rotors angeordnet sind, wobei die Schließung eines der Kontakte (13) die Elektromagnetisierung des Paares der Dipolstücke (5) auslöst, das mit ihm verbunden ist.

6. Motor gemäß Patentanspruch 5, dadurch gekennzeichnet, daß die Versorgungseinrichtungen außerdem ein Rotationsteil (15) enthalten, auf welchem die Kontakte (13) und die Vorrichtungen montiert sind, um dieses weitere Rotationsteil (15) in Rotation um die Achse (2) des Rotors zu versetzen.

7. Motor gemäß Patentanspruch 6, dadurch gekennzeichnet, daß die Stromversorgungseinrichtungen außerdem mechanische Teile enthalten, um das andere Rotationsteil (15), das die Kontakte trägt, auf Distanz zu halten.

8. Motor gemäß Patentanspruch 7, der sich dadurch kennzeichnet, daß die mechanischen Teile, die das andere Teil (15) auf Distanz halten, einen kleinen Elektromotor (17) enthalten.

9. Motor gemäß Patentanspruch 4, der sich dadurch kennzeichnet daß die Spule (6) jedes Dipolstückes (5) des Stators (1) sich in Serienschaltung mit der Stromquelle und einem der Kontakte (13) der Versorgungseinrichtungen befindet.

10. Motor gemäß Patentanspruch 4, dadurch gekennzeichnet, daß die Spule (6) jedes Dipolstückes (5) des Stators sich in Serienschaltung mit der Stromquelle und einem elektronischen Schalter befindet, wobei dieser Schalter durch einen der Kontakte (13) der Versorgungseinrichtungen gesteuert wird.

11. Motor gemäß Patentanspruch 10, der sich dadurch kennzeichnet, daß der elektronische Schalter einen Steuertransistor (27) umfaßt und wenigstens einen von dem Steuertransistor (27) gesteuerten Transistor (25).

12. Motor gemäß Patentanspruch 10 oder 11, dadurch gekennzeichnet, daß jedes Dipolstück (5) des Stators (1) mehrere Spulen (23) enthält, die parallel geschaltet sind, wobei diese Spulen (23) durch den gleichen Kontakt unter diesen besagten Kontakten (13) gesteuert werden.

Fig. 1

Fig. 2

Fig. 3

Fig. 4

Fig. 5

Fig. 6